# EUROPEAN PATENT SPECIFICATION

(11) **EP 0 281 963 B1**
(45) Date of publication and mention of the grant of the patent: **16.06.1993**
(21) Application number: 88103389.8
(22) Date of filing: 04.03.1988
(51) Int. Cl.: G01N 21/64

(54) **Ultraviolet fluorescent analyzer**
Analysegerät für UV-Fluoreszenz
Appareil d'analyse de fluorescence ultraviolette

(30) Priority: 11.03.1987 JP 57250/87; 11.03.1987 JP 36253/87 U; 11.03.1987 JP 36254/87 U
(43) Date of publication of application: 14.09.1988
(73) Proprietor: HORIBA, LTD., Minami-ku Kyoto (JP)
(72) Inventor: Aoki, Takeshi, Nakagyo-ku Kyoto (JP); Kada, Norio, Ibaraki-city Osaka (JP); Mikasa, Hajime, Moriyama-city Siga-prefecture (JP)
(74) Representative: TER MEER STEINMEISTER & PARTNER GbR

(56) References cited:
- US-A- 3 457 407
- US-A- 3 536 898
- US-A- 4 082 459
- US-A- 4 260 890
- US-A- 4 319 842
- US-A- 4 469 946
- ANALYTICAL CHEMISTRY, vol. 46, no. 8, July 1974, pages 1024-1028, Columbus, Ohio, US; F.P. SCHWARZ et al.: "Fluorescence Detection of Sulfur Dioxide in Air at the Parts per Billion Level"

## Description

The present invention relates to an improvement of an ultraviolet fluorescent analyzer used for measuring a concentration of for example SO₂ (sulfur dioxide) in air by ultraviolet fluorescent analysis.

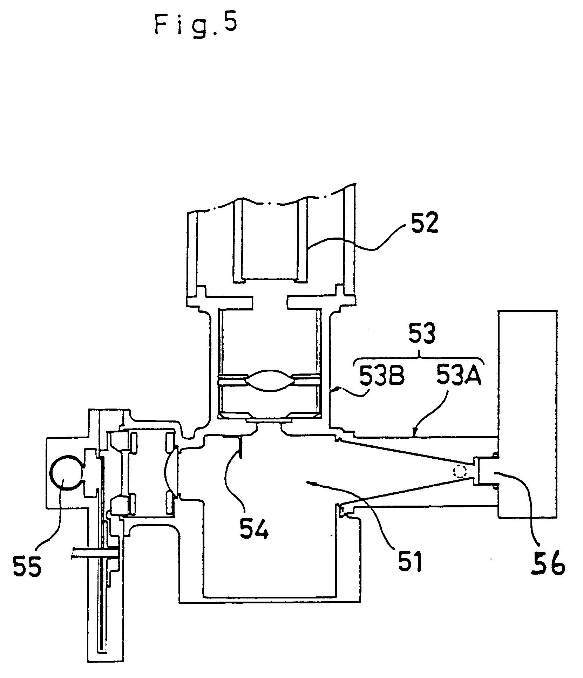

An example of a conventional analyzer of the type specified in the first part of claim 1 is shown in Analytical Chemistry, vol.46, no8 July 1974, pages 1024-1028. A similar example is illustrated in figure 5. This analyser comprises an ultraviolet ray-emitting light source 55 and a light source-light quantity detector 56 for monitoring a light quantity emitted by said light source 55. The light source 55 and the detector 56 are disposed at positions opposite to each other with a fluorescence chamber 51 between them. The fluorescence chamber 51 is formed within a cell 53. A fluorescence detector 52 and a stray light-attenuating detend portion are disposed at positions opposite to each other and on opposite sides of said fluorescence chamber 51 in a direction meeting at right angles with the optical path from the light source 55 to the light source-light quantity detector 56.

If, in such an ultraviolet fluorescent analyzer, a sample gas is introduced into the fluorescence chamber within said cell and said ultraviolet ray-emitting light source is activated so that an ultraviolet ray having a wave length of for example about 215 nm is emitted into said fluorescence chamber, SO₂ molecules included in said sample gas are repeatedly exited and caused to emit ultraviolet fluorescent radiation to return to their base state.

The strength of the ultraviolet fluorescent-radiation emitted in these processes is proportional to the number of excited SO₂ molecules, that is, to the concentration of SO₂ existing within the fluorescence chamber. Accordingly, the concentration of SO₂ in the sample gas can be determined on the basis of the result of ultraviolet fluorescence detection with said fluorescence detector.

However, even though, the ultraviolet fluorescent radiation is emitted from the fluorescence chamber in all directions, only a part of the fluorescent radiation can be detected by the fluorescence detector of the conventional ultraviolet fluorescent analyzer. Accordingly, the fluorescent signal incident upon said fluorescence detector is comparatively weak, and as a result, the accuracy attained in the measurement of the concentration of SO₂ was not satisfactory.

In principle, the fluorescent light could simply be collected by means of a mirror and the like. However, in this case, the increase of stray light is remarkably lager than the increase of sensitivity. For this reason, such an arrangement has never been practically used.

US-A-3 457 407 discloses a fluorescent analyzer which employs a concave mirror for focusing the fluorescent light onto the fluorescence detector. In place of a light source-light quantity detector, this analyzer comprises an observation window which provides a direct view on the detection of particles in the fluorescence chamber.

When a light source-light quantity detector is provided in the cell in order to monitor the light quantity emitted by the light source, thereby improving the accuracy of measurement of the concentration of SO₂, it is remarkably important to avoid as far as possible that light reflected in a portion of the cell from said fluorescence chamber to said light source-light quantity detector is incident as stray light on the fluorescence detector. Accordingly, as shown in figure 5, an inside surface of the portion 53A of the cell from the vicinity of the fluorescence chamber 51 to the light source-light quantity detector 56 is tapered so that its diameter is reduced toward the side of the detector 56, whereby the production of stray light is reduced as far as possible.

In addition, a light-shielding member 54 formed of a L-letter-shaped plate is disposed at a fluorescence inlet portion e through which the fluorescent radiation is transmitted from the fluorescence chamber 51 to the fluorescence detector 52. The light-shielding member 54 is provided for preventing light emitted from the light source 55 from being directly incident upon said fluorescence detector 52 as stray light.

With the above described construction, since the inside surface of the portion 53a of the cell is tapered, the incidence of stray light upon said fluorescence detector 52 can effectively be prevented, but a disadvantage has occured in that various problems are produced in view of production.

As will be obvious from the construction of the cell 53 shown in figure 5, if, for example, the cell 53 is produced by casting, it cannot be integrally cast, because the tapered portion 53A would prevent the removal of a casting mold. Consequently, the portion 53A and the rest 53B of the cell must be molded separately. This incurs the disadvantage that not only the number of parts to be molded by casting is increased, thereby increasing the cost of production and assembly, but also an excessive labor is required, such as an inspection of leakage at a joint between the portions 53A and 53B.

Further, if the cell of an ultraviolet fluorescent analyser is formed for example of an aluminum casting, in order to reduce production costs, the problem of stray light becomes virulent due to the high reflectivity of the surface of the aluminum casting and due to the adsorbtion of SO₂ onto the inside surfaces of the cell. For this reason, the inside surface of the cell formed of an aluminum casting has been subjected to vervet painting.

However, such a painting treatment has shown the disadvantage that the applicability of the analyzer is limited to a dried gas as a sample gas.

If the sample gas is wet, H₂O contained in the gas is dewed and adsorbed on the painted surface, and SO₂ is dissolved in water, thereby producing an error of measurement due to the dissolution loss of SO₂.

It has been proposed to eliminate the above described disadvantage by coating the inside surface of the cell with black Teflon (trade name; DuPont). However, since the inside surface of the cell is complicated in shape, it is in this case impossible to coat the inside surface at one time, so that the cell must necessarily have a construction comprising a pluratility of divisions that are combined with each other. Accordingly, the number of cast parts is increased which leads to the disadvantages mentioned before. In addition, there is a risk that a slight error of assembly leads to a shift of the optical axis, which is fatal for the measurement.

It is an object of the invention to provide an ultraviolet fluorescent analyzer which provides an improved measurement accuracy and nevertheless can be manufactured at low cost.

According to the invention, this object is achieved by providing an ultroviolet fluorescent analyzer having the features specified in claim 1.

The dependent claims relate to useful details of the analyzer according to the invention, which contribute to the above-stated object.

According to claim 1, a concave mirror is disposed in the straylight-attenuating dented portion disposed at a position opposite to the fluorescence detector with respect to the fluorescence chamber, so that, of the ultraviolet fluorescent radiation emitted in all directions, also the radiation emitted toward the stray light-attenuating dented portion, which has been wasteful heretofore, can be incident upon the fluorescence detector, which leads to a superproportional increase of the fluorescence signal in relation to stray light. In this way, it becomes possible to measure the concentration of SO₂ with high accuracy.

Additionally, the L-letter-shaped plate-like light-shielding member of the conventional construction is replaced by a cylindrical light-shielding member, whereby the incidence of stray light upon the fluorescence detector can be effectively suppressed. In this case, it is possible. to construct the inside surface of the portion of the cell from the vicinity of the fluorescence chamber to the light source-light quantity detector in a straight form, i.e. not tapered, without inadmissibly increasing the quantity of stray light incident on the fluorescence detector. Consequently, the cell may be integrally cast as a hole, so that no assembly operation nor an inspection of leakage is required.

According to a preferred embodiment, the cell is provided with a heater for heating the sample gas contained in the fluorescence chamber, and the inside surface of the cell is painted in black by electrodeposition painting. As a result, H₂O contained in the sample gas can be prevented from dewing on the inside surface of the cell, and a loss of SO₂ due to dissolution of the SO₂ in said H₂O can be prevented. Thus, even when the sample gas is wet, the concentration of SO₂ can be measured with high accuracy.

Moreover, since the black painting of the inside surface of the cell aiming at a reduction of stray light is carried out by electrodeposition painting, the inside surface of the cell can be painted at one stroke, regardless of the complicacy of the inside surface of the cell. The cell can be formed of a casting and the production costs can be reduced. Further, the production efficiency can be increased by painting a plurality of cells at one time.

Preferred embodiments of the invention will be described below with reference to the drawings, in which:
- - Fig. 1: is a sectional view showing an ultroviolet fluorescent analyzer according to the invention;
- - Fig. 2: is a detailed view showing a light source slit;
- - Fig. 3 and 4: are perspective views showing modified embodiments of a cylindrical light-shielding member;
- - Fig. 5: is a sectional view showing a conventional ultraviolet fluorescent analyzer; and

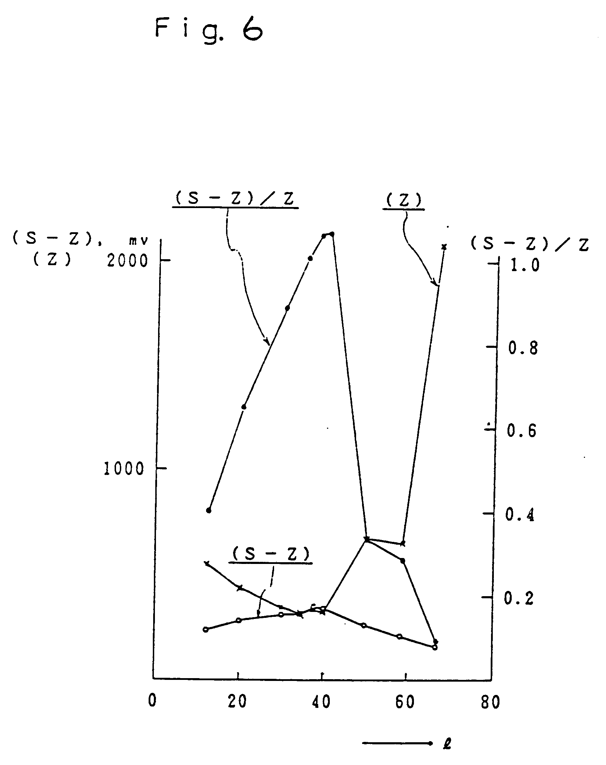

- - Fig. 6: is a graph showing experimental results.

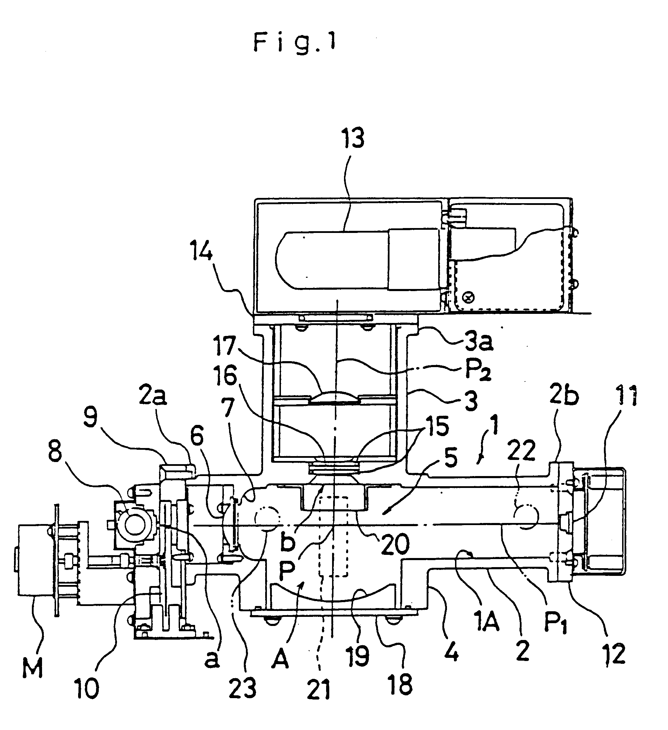

Referring to figure 1, reference numeral 1 designates a cast cell made of aluminum of which the inside surface is painted in black by electrodeposition painting (a method of painting by electrophoresis in which a direct current voltage is applied between an article to be painted as an anode and a cathode in a dissociatable water paint), said cast cell 1 comprising a straight cylindrical portion 2 provided at both ends thereof with flanges 2a, 2b. The cylindrical portion 2 is integrally provided with a first cylindrical member 3 and a second cylindrical member 4 which are concentric to each other and of which the center axis P₂ meets at right angles with the center axis P₁ of the cylindrical portion 2. A fluorescence chamber 5 is formed in the vicinity of the intersecting point P of the center axes P₁ and P₂ of said cylindrical portion 2 and said first and second cylindrical members, respectively. A holder 7 for a collecting lens 6 having a focus in the vicinity of said intersecting point P (concretly speaking, a position on the center axis P₁ and slightly separated from the intersecting point P toward the side of the flange 2b but also a position on said intersecting point P or slightly separated therefrom toward the side of the flange 2a may be used) is connected with one end of said cylindrical portion 2 in the vicinity of the fluorescence chamber 5.

Reference numeral 8 designates an ultraviolet ray-emitting light source for emitting an ultroviolet ray having a wave length of for example about 215 nm. A holder 9 for holding said light source 8 is mounted on the flange 2a provided at one end of said cylindrical portion 2. A chopper 10 which is rotated by a synchronous motor M is held by said holder 9. When the chopper 10 is rotated, the ultroviolet ray emitted from light source 8 is intermittently incident upon the sample gas introduced into the fluorescence chamber 5, so that the output of the detector is modulated into an alternative current, thereby correcting the background of the detector.

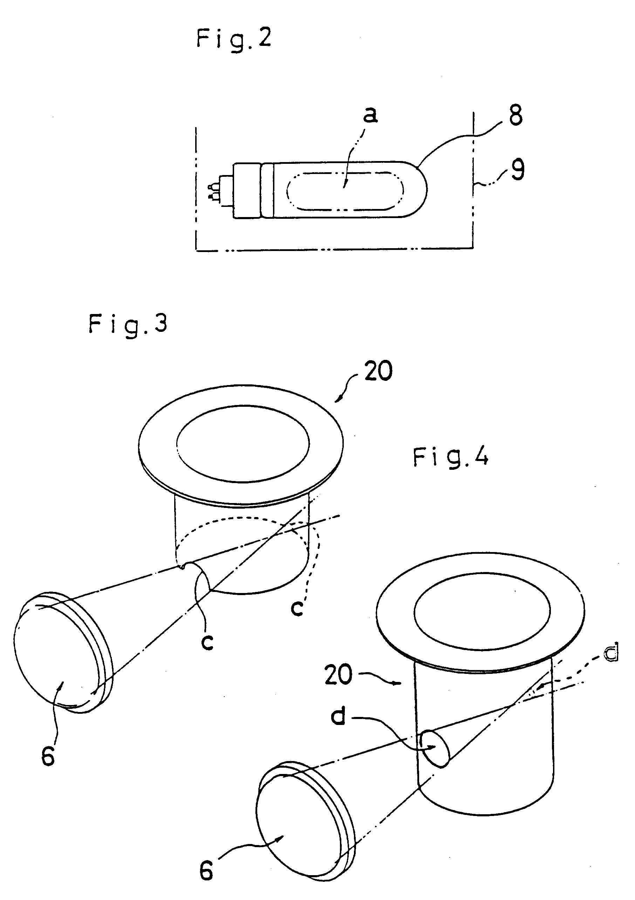

As is shown in figure 2, a rod-like zinc lamp is used as said ultraviolet ray-emitting light source 8, and a long slit having a short diameter slightly shorter than the diameter of said lamp is used as a light source slit (a) for emitting ultroviolet rays toward said collecting lens 6. Due to this shape of the light source slit (a), a maximum light source-light quantity is incident upon the fluorescence chamber 5.

Reference numeral 11 designates a light source-light quantity detector comprising a photo diode or a photo cell for monitoring the light quantity emitted by the light source 8. A holder 12 for said light source-light quantity detector 11 is mounted on the flange 2b.

Reference numeral 13 designates a fluorescence detector having a holder 14 which is mounted on a flange 3a of the first cylindrical member 3. A color glass filter 16 and a collecting lens 17 held by an O-ring 15 are disposed midway in an optical path from the fluorescence chamber 5 to the fluorescence detector 13. By means of the fluorescence detector 13, a light quantity of an ultraviolet fluorescent radiation emitted from SO₂ molecules in said flourescence chamber 5 is detected to determine the concentration of SO₂ within the sample gas.

Reference numeral 18 designates a cover member for closing an opening formed in the second cylindrical member 4. The cover member 18 and the second cylindrical member 4 form a stray light-attenuating dented portion A. The cover member 18 is provided with a concave mirror 19. In the fluorescence chamber 5, the fluorescent radiation is emitted into all directions. The portion of this radiation which is emitted toward the stray light-attenuating dented portion A is reflected by the concave mirror 19 toward the fluorescence detector 13 to increase the quantity of fluorescent signal incident upon the fluorescence detector.

Reference numeral 20 designates a shading member for preventing the stray light from entering into said fluorescence detector 13. The shading member 20 is connected with an inlet portion b through which the fluorescent radiation is transmitted from the fluorescence chamber 5 to the fluorescence detector 13. The free end of the cylindrical shading member 20 is disposed in such a position that the light beam emitted from the light source 8 and passed through the collecting lens 6 may not be shaded.

Reference numeral 21 designates an electric heater disposed on an outside surface of the cell 1 in the vicinity of the fluorescence chamber 5 for heating the fluorescence chamber. Reference numeral 22 designates an inlet port for the sample gas, and reference numeral 23 designates an outlet port for the sample gas.

In addition, all constituent parts of the analyzer which are brought to contact with sample gas, such as said various kinds of holder 9, 12,14, said cover member 18 and said shading member 20, excepting said collecting lens 6, light source light-quantity detector 11, color glass filter 16 and concave mirror 19 are painted in black by electrodeposition painting, black alumite working, black Teflon (trade name; DuPont) coating and the like, in the same manner as the inside surface of said cell 1.

With the ultraviolet fluorescent analyzer having the above described construction, the fluorescence chamber 5 is heated by thermal energy supplied thereto from the heater 21. Fluorescence-inducing light is emitted from said ultraviolet ray-emitting light source 8 toward the fluorescence chamber 5 through the light source slit (a). Simultaneously, the light quantity of the light source 8 is monitored by said detector 11 to correct the light quantity of the light source.

Since the fluorescence chamber 5 is heated, H₂O contained the sample gas can be prevented from dewing on the inside surface of the fluorescence chamber 5, since thermal energy is supplied to the sample gas via the walls of the fluorescence chamber. Thus, even when the sample gas introduced into the fluorescence chamber is remarkably wet, no liquid H₂O is adsorbed at the walls of the cell 1, and the dissolution loss of SO₂ is suppressed.

The SO₂ molecules contained in the sample gas are excited by the ultroviolet ray emitted from said light source 8, and fluorescent radition is emitted from the SO₂ molecules, when they return from the excited state to the base state. A part of the fluorescent radiation is directly incident upon the fluorescence detector 13. Another part of the fluorescent radiation is emitted toward the stray light-attenuating dented portion A and is reflected toward the fluorescence detector 13 by means of the concave mirror 19. In this way, the quantity of the fluorescent signal incident upon the fluorescence detector 13 is increased, so that the concentration of SO₂ can be determined with high sensitivity.

Incidentally, if the inside surface of the portion 1A of the cell 1 from the fluorescence chamber 5 to the light source light-quantity detector 11 has a non-tapered straight tubular shape as above described, a problem occurs in that the light emitted from the ultraviolet ray-emitting light source 8 is reflected from the straight surface at the portion 1A of the cell, thereby increasing the quantity of stray light incident upon the fluorescence detector 13.

However, in the shown embodiment, the incidence of stray light from the portion 1A upon the fluorescence detector 13 is effectively suppressed due to the fact that the light-shielding member 20 has a cylindrical shape and is disposed around the inlet portion b.

Other preferred embodiments of the cylindrical light-shielding member 20 are shown in figures 3 and 4. According to figure 3, the edge of the cylindrical light-shielding member 20 at the free end thereof has at least one curved edge portion C, so that the shielding member can be brought very close to the beam emitted from the light source 8 and transmitted through the collecting lens 6, without shielding this beam. According to figure 4, the free end of the cylindrical light-shielding member 20 is extended toward the dented portion A for better attenuating the stray light, and the shielding member is provided with a transmission hole d through which the beam from the light source 8 is transmitted. In addition, in both cases, the surface portion brought into contact with the sample gas is painted and finished in black.

In general, if a part of the fluorescent radiation is reflected toward the side of the fluorescence detector 13 by means of the concave mirror 19, the quantity of the fluorescent signal is encreased, but the quantity of stray light entering in into the fluorescence detector is also encreased.

However, by suitably setting the focal distance and the diameter of the concave mirror 19, the distance from the concave mirror 19 to the optical axis of the collecting lens 6 and the like, it is possible to increase the quantity of the fluorescent signal at a ratio lager than the ratio of increase of the stray light, so that the concentration of SO₂ can be determined with high accuracy.

The results obtained with an analyzer of the above described construction in which the concave mirror 19 has a focal distance of 25 mm and a diameter of 60 mm is shown in figure 2.

The reference letter ℓ designates the distance from the optical axis of the collecting lens 6 to the concave mirror 19. In experiments, this distance was varied in steps of 10 mm. The reference letter Z designates the output from the fluorescence detector 13 on the basis of stray light (background) when a zero gas is introduced into the cell 1, while reference letter S designates the output from the fluorescence detector 13 on the basis of an incident light when the sample gas containing SO₂ is introduced into the cell 1. It is found for the ultraviolet fluorescent analyzer used in these experiments that a distance of 40 mm between the concave mirror 19 and the optical axis of the collecting lens 6 is preferable.

The above described experiment was repeated under the same conditions, after the concave mirror 19 had been removed and the cylindrical shielding member 20 had been replaced by the conventional shielding member 54 shown in figure 5.

When the values of Z, S - Z and (S - Z)/Z which where obtained in the experiment without concave mirror 19 are taken as units (value 1.00),the corresponding values obtained in the experiment with concave mirror 19 are: Z = 0.88, S - Z = 2.49 and (S - Z)/Z = 2.83. It will be understood from this result that the provision of concave mirror 19 is remarkably effective in view of measurement accuracy.

The result Z = 0.88 indicates that the quantity of stray light has been reduced in the analyzer according to the invention, while it was stated before that the provision of the mirror 19 should lead to an increase of stray light. The reduction of the quantity of stray light is due to the fact that the cylindrical shielding member 20 according to the invention has shading properties superior to that of the conventional shielding member.

However, since the provision of the concave mirror 19 leads to an increase of the quantity of fluorescent signal at a ratio larger than the ratio of increase of stray light, the accuracy in measurement of the concentration of SO₂ can be remarkably improved irrespectively of the shape of the shading member, simply by disposing the concave mirror 19 at such positions, that the output value of (S - Z)/Z becomes a maximum, taking the focal distance, the diameter and the like of the concave mirror 19 into consideration.

## Claims

1. An ultraviolet fluorescent analyzer comprising an ultraviolet ray-emitting light source (8) and a light source-light quantity detector (11) for monitoring a light quantity emitted by said light source, a fluorescence chamber (5) disposed between said light source and said light source-light quantity detector and formed within a cell (1), and a fluorescence detector (13) and a stray light attenuating dented portion (A) disposed at positions opposite to each other with said fluorescence chamber between them in a direction meeting at right angles with an optical path from said light source to said light source-light quantity detector, **characterized** by that a concave mirror (19) is disposed in said dented portion (A) for reflecting fluorescent radiation, which is emitted from said fluorescence chamber (5), toward the fluorescence detector (13), and in that a cylindrical light-shielding member (20) for preventing stray light from entering into said fluorescence detector (13) is connected with a fluorescence inlet portion (b) through which fluorescent radiation is transmitted from said fluorescence chamber (5) to said fluorescence detector (13).

2. An ultraviolet fluorescent analyzer according to claim 2, wherein an inside surface of a portion (1A) of said cell (1) from the vicinity of said fluorescence chamber (5) to said light source-light quantity detector (11) is shaped in a straight tubular form.

3. An ultraviolet fluorescent analyzer according to claim 1 or 2, wherein said cell (1) is provided with a heater (21) for heating a sample gas within said fluorescence chamber (5).

4. An ultraviolet fluorescent analyzer according to claim 3, wherein the inside surface of said cell (1) is painted in black by electrodeposition painting.

5. An ultraviolet fluorescent analyzer according to claim 1 or 2, wherein an edge portion (C) at the free end of said cylindrical light-shielding member (20) is shaped in the form of a curved edge which partly surrounds the light beam transmitted from the light source (8) towards the light source-light quantity detector (11).

6. An ultraviolet fluorescent analyzer according to claim 1 or 2, wherein the circumferential wall of said cylindrical light-shielding member (20) is provided with a transmission hole (d) for transmitting therethrough the light beam from said light source (8) to said light source-light quantity detector (11).

## Patentansprüche

1. Ultraviolett-Fluoreszenzanalysegerät mit einer UV-Strahlung emittierenden Lichtquelle (8) und einem Lichtquellen-Lichtmengendetektor (11) zur Überwachung einer von der Lichtquelle emittierten Lichtmenge, einer zwischen der Lichtquelle und dem Lichtquellen-Lichtmengendetektor angeordneten und in einer Zelle (1) ausgebildeten Fluoreszenzkammer (5) und einem Fluoreszenzdetektor (13) und einem streulichtunterdrückenden eingezogenen Teil (A), die an einander gegenüberliegenden Positionen, mit der Fluoreszenzkammer zwischen ihnen, in einer Richtung angeordnet sind, die den optischen Pfad von der Lichtquelle zu dem Lichtquellen-Lichtmengendetektor rechtwinklig schneidet, dadurch **gekennzeichnet,** daß in dem eingezogenen Teil (A) ein Hohlspiegel (19) zum Reflektieren von Fluoreszenzstrahlung, die von der Fluoreszenzkammer (5) emittiert wurde, in Richtung auf den Fluoreszenzdetektor (13) angeordnet ist, und daß ein zylindrisches Lichtabschirmungselement (20) zur Verhinderung des Eintritts von Streulicht in die Fluoreszenzkammer (13) mit einem Fluoreszenz-Einlaßteil (b) verbunden ist, durch den Fluoreszenzstrahlung von der Fluoreszenzkammer (5) zu dem Fluoreszenzdetektor (13) hindurchgelassen wird.

2. Ultraviolett-Fluoreszenzanalysegerät nach Anspruch 1, bei dem eine innere Oberfläche eines Teils (1A) der Zelle (1) vom Bereich der Fluoreszenzkammer (5) aus zu dem Lichtquellen-Lichtmengendetektor (11) in Form eines geraden Rohres gestaltet ist.

3. Ultraviolett-Fluoreszenzanalysegerät nach Anspruch 1 oder 2, bei dem die Zelle (1) mit einer Heizeinrichtung (21) zum Erhitzen eines Probengases in der Fluoreszenzkammer (5) versehen ist.

4. Ultraviolett-Fluoreszenzanalysegerät nach Anspruch 3, bei dem die innere Oberfläche der Zelle (1) durch elektrische Abscheidung schwarz lackiert ist.

5. Ultraviolett-Fluoreszenzanalysegerät nach Anspruch 1 oder 2, bei dem ein Randbereich (C) am freien Ende des zylindrischen Lichtabschirmungselements (20) als gekrümmte Kante geformt ist, die den von der Lichtquelle (8) zu dem Lichtquellen-Lichtmengendetektor (11) ausgesandten Lichtstrahl teilweise umgibt.

6. Ultraviolett-Fluoreszenzanalysegerät nach Anspruch 1 oder 2, bei dem die Umfangswand des zylindrischen Lichtabschirmungselements (20) mit einem Durchtrittsloch (d) für den Durchtritt des Lichtstrahls von der Lichtquelle (8) zu dem Lichtquellen-Lichtmengendetektor (11) versehen ist.

## Revendications

1. Analyseur de fluorescence ultraviolette comportant une source lumineuse (8) émettant un rayonnement ultraviolet et un détecteur de quantité de lumière (11) de la source lumineuse pour contrôler une quantité de lumière émise par ladite source lumineuse, une chambre de fluorescence (5) disposée entre ladite source lumineuse et ledit détecteur de quantité de lumière de la source lumineuse et formée à l'intérieur d'une cellule (1), et un détecteur de fluorescence (13) et une partie évidée (A) atténuant la lumière parasite disposés en des emplacements en vis-à-vis l'un de l'autre avec interposition de ladite chambre de fluorescence entre eux dans une direction croisant orthogonalement un trajet optique allant de ladite source lumineuse jusqu'audit détecteur de quantité de lumière de la source lumineuse, caractérisé en ce qu'un miroir concave (19) est disposé dans ladite partie évidée (A) pour réfléchir un rayonnement fluorescent, qui est émis depuis ladite chambre de fluorescence (5), vers le détecteur de fluorescence (13), et en ce qu'un élément écran de lumière cylindrique (20) pour empêcher une lumière parasite de pénétrer dans ledit détecteur de fluorescence (13) est relié à une partie (b) d'admission de fluorescence à travers laquelle le rayonnement fluorescent est transmis depuis ladite chambre de fluorescence (4) audit détecteur de fluorescence (13).

2. Analyseur de fluorescence ultraviolette selon la revendication 1, dans lequel une surface intérieure d'une partie (1A) de ladite cellule (1) s'étendant depuis ladite chambre de fluorescence (5) jusqu'audit détecteur de quantité de lumière (11) de la source lumineuse est en forme de cylindre rectiligne.

3. Analyseur de fluorescence ultraviolette selon la revendication 1 ou 2, dans lequel ladite cellule (1) est équipée d'un organe de chauffage (21) pour chauffer un gaz échantillon à l'intérieur de ladite chambre de fluorescence (5).

4. Analyseur de fluorescence ultraviolette selon la revendication 3, dans lequel la surface intérieure de ladite cellule (1) est peinte en noir par peinture par électrodéposition.

5. Analyseur de fluorescence ultraviolette selon la revendication 1 ou 2, dans lequel une partie de bord (C) à l'extrémité libre dudit élément écran de lumière cylindrique (20) est sous la forme d'un bord incurvé qui entoure partiellement le faisceau de lumière émis par la source lumineuse (8) vers le détecteur de quantité de lumière (11) de la source lumineuse.

6. Analyseur de fluorescence ultraviolette selon la revendication 1 ou 2, dans lequel la paroi circonférentielle dudit élément écran de lumière cylindrique (20) est munie d'un trou de transmission (d) pour transmettre à travers celui-ci le faisceau lumineux émis par ladite source de lumière (8) audit détecteur de quantité de lumière (11) de la source lumineuse.
